# EUROPÄISCHE PATENTSCHRIFT

(11) **EP 3 334 669 B1**
(45) Veröffentlichungstag und Bekanntmachung des Hinweises auf die Patenterteilung: **14.05.2025**
(21) Anmeldenummer: 16751528.7
(22) Anmeldetag: 28.07.2016
(51) Int. Cl.: B65G 23/30, B65G 23/32, B65G 47/26, B65G 47/28

(54) **TRANSPORTVORRICHTUNG SOWIE TRANSPORTVERFAHREN MIT EINER DERARTIGEN TRANSPORTVORRICHTUNG**
TRANSPORT DEVICE AND TRANSPORT METHOD COMPRISING SUCH A TRANSPORT DEVICE
DISPOSITIF DE TRANSPORT ET PROCÉDÉ DE TRANSPORT EMPLOYANT UN TEL DISPOSITIF DE TRANSPORT

(30) Priorität: 14.08.2015 DE 102015113435
(43) Veröffentlichungstag der Anmeldung: 20.06.2018
(73) Patentinhaber: KHS GmbH, 44143 Dortmund (DE)
(72) Erfinder: SCHOLZ, Ulrich, 59348 Lüdinghausen (DE); GÖTZE, Sebastian, 44309 Dortmund (DE); STIENEN, Thomas, 59425 Unna (DE)
(86) Internationale Anmeldenummer: PCT/EP2016/068117
(87) Internationale Veröffentlichungsnummer: WO 2017/029100

(56) Entgegenhaltungen:
- WO-A1-2015/100668
- DE-A1- 1 945 932
- DE-A1- 102011 080 414
- GB-A- 1 466 965
- US-A- 3 876 061
- US-A1- 2003 047 425
- EISENRING P: "Praezisionsgetriebe nach Mass", TECHNISCHE RUNDSCHAU, HALLWAG, BERN; CH, DE, vol. 98, no. 22, 24 November 2006 (2006-11-24), pages 30 - 31, XP001523483, ISSN: 1023-0823

## Beschreibung

Die Erfindung bezieht sich auf eine Transportvorrichtung zum Transportieren von Transportgut gemäß dem Oberbegriff des Patentanspruches 1. Weiterhin bezieht sich die vorliegende Erfindung auf ein Transportverfahren mit einer derartigen Transportvorrichtung.

"Transportgut" im Sinne der vorliegenden Erfindung sind insbesondere "Behälter" wie beispielsweise Dosen, Flaschen, Tuben, Pouches, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind. Das "Transportgut" kann im Rahmen der vorliegenden Erfindung aber auch von von "Gebinden" wie beispielweise Paketen, Kartons, Trays, Kisten oder Folienpacks, gebildet werden, die jeweils mindestens zwei Behälter und wenigstens ein (Um-)Verpackungselement aufweisen.

Transportvorrichtungen bzw. Transporteure zum Transportieren von Transportgütern mit einer Vielzahl von jeweils eine geschlossene Schlaufe bildenden und umlaufend angetriebenen Transportelementen, insbesondere auch in Form von Transportketten oder Scharnierbandketten, sind hinlänglich bekannt. Die Transportelemente bilden jeweils mit ihrer oberen, sich gegen wenigstens eine Gleichführung abstützenden Länge die gemeinsame horizontale oder im Wesentlichen horizontale Transportebene oder -fläche, auf das Transportgut mit seinem Transportgutboden oder seinem Standboden aufsteht.

Bekannt ist es hierbei auch, dass die Transportelemente nicht in beliebig großer Länge ausgeführt werden können, da bei zu großer Länge die zwischen dem jeweiligen Transportelement und der Gleitführung entstehenden Reibungskräfte die maximale Zugfestigkeit der Transportelemente, insbesondere auch bei einem Dauerbetrieb der Transportvorrichtung, überschreiten würden. Aus diesem Grunde ist es insbesondere bei Transporteuren größerer Länge üblich, mehrere in Transportrichtung aneinander anschließende Transportelemente vorzusehen, wodurch sich dann auch die Möglichkeit einer verbesserten Steuerung und/oder Regelung der Leistung und/oder Transportgeschwindigkeit der Transportelemente z.B. durch einen eigenen Antrieb für jedes Transportband oder für eine Gruppe von Transportbändern ergibt.

Transportvorrichtungen dieser Art weisen dann aber zwangsläufig Übergänge zwischen in Transportrichtung anschließenden Transportelementen auf. Die an diesen Übergängen gebildeten Lücken sind an der Transportfläche üblicherweise durch Transfer- oder Behältergleitelemente, Überschub-, Transfer- oder Überschubstationen, überbrückt. Dennoch stellen diese Übergänge eine Störung an der Transportfläche dar, d.h. das Transportgut steht beim Passieren solcher Übergänge allenfalls nur unvollständig auf den oberen Längen der Transportelemente auf.

Die DE 19 45 932 A1 offenbart eine Transportvorrichtung nach dem Oberbegriff des Anspruchs 1.

Nach der DE 10 2011 080 414 A1 wird ein Transportabschnitt einer Transportschnecke zur Förderung von Gruppen mit mindestens zwei Artikeln beschrieben. Dabei ist zumindest einem rotierenden Umlenkelement für ein darüber geführtes Zugmittel eine steuerbare Antriebseinrichtung zugeordnet. Neben der Antriebseinrichtung ist auch eine Verzögerungseinrichtung bzw. Rückhalteeinrichtung abgestimmt steuerbar.

Ausgehend hiervon liegt der vorliegenden Erfindung die Aufgabe zu Grunde, eine Transportvorrichtung zum Transportieren von Transport bereitzustellen, die die vorgenannten Nachteile vermeidet und bei hoher Betriebssicherheit eine im Vergleich zum Stand der Technik deutlich längere Transportstrecke bei gleichzeitig erheblicher Reduzierung des Aufwandes in konstruktiver Hinsicht bereitstellt. Diese Aufgabe wird mit den Merkmalen des Patentanspruches 1 gelöst. Die Unteransprüche betreffen dabei besonders bevorzugte Ausführungsvarianten der Erfindung.

Der wesentliche Aspekt gemäß der Transportvorrichtung besteht dabei darin, dass das wenigstens eine Transportelement mehrere drehbeweglich und relativ zueinander verschiebbar angeordnete Transportelementabschnitte aufweist, derart, dass durch eine relative Verschiebung der einzelnen Transportelementabschnitte zueinander die Gesamtlänge des jeweiligen Transportelementes veränderbar ist und dass die Transportstrecke wenigstens zwei Transportstreckenabschnitte aufweist, die sich jeweils zwischen zwei in Transportrichtung aufeinander folgenden Antriebseinrichtungen erstrecken, so dass durch eine gezielte Ansteuerung insbesondere mit den jeweiligen benachbarten Transportstreckenabschnitten in Wirkverbindung stehender Antriebseinrichtungen mit einer Differenzgeschwindigkeit eine Akkumulation und/oder Lückenbildung der jeweils auf diesem Transportstreckenabschnitt befindlichen Transportgüter einstellbar ist. Die erfindungsgemäße Transportvorrichtung hat damit den entscheidenden Vorteil, dass sich durch das Vorsehen von wenigstens zwei Antriebseinheiten die Zugbelastung des Transportelementes auf die durch die jeweiligen mittels der entsprechenden Antriebseinrichtung angetriebenen Transportstreckenabschnitte vorzugsweise gleichmäßig verteilt. Damit ist durch die erfindungsgemäß vorgesehenen wenigstens zwei Antriebseinheiten eine deutlich längere Transportstrecke realisierbar als im Vergleich zum Stand der Technik. Indem wenigstens ein in seiner Gesamtlänge veränderbares Transportelement vorgesehen ist, das individuell und/oder dynamisch für jeden Transportstreckenabschnitt mit einer spezifischen Geschwindigkeit über die jeweils zugeordnete Antriebseinrichtung ansteuerbar ist, kann ein Aufstauen und/oder Beschleunigen der jeweils am dem entsprechenden Transportstreckenabschnitt befindlichen Transportgüter erreicht werden.

Hierbei ist vorgesehen, dass zur abgestimmten Ansteuerung der einzelnen Transportstreckenabschnitte untereinander die jeweils den Transportstreckenabschnitten zugeordneten Antriebseinrichtungen mit einer Steuereinheit verbunden sind. Bevorzugt kann die Steuereinheit hierbei wenigstens eine Prozesseinheit, eine mit der Prozesseinheit zusammenwirkende Speichereinheit sowie eine Schnittstelle aufweisen. Die Ansteuerung der jeweiligen Antriebseinrichtungen erfolgt vorteilhaft über eine in der Prozesseinheit ausgeführte Steuerroutine. Hierfür kann die Speichereinheit zum zumindest zeitweisen Speichern von Ist-Steuerdaten und/oder Soll-Steuerdaten ausgebildet sein, wobei zumindest eine erfasste Ist-Drehzahl, Ist-Drehrichtung, Ist-Drehwinkel und zumindest ein Ist-Drehmoment die Soll-Steuerdaten bilden.

In einer weiteren bevorzugten Ausführungsvariante kann die Prozesseinheit dazu eingerichtet sein, über die Schnittstelle empfangene Ist-Steuerdaten mit Soll-Steuerdaten zu vergleichen und abhängig davon in Steuerdaten für die Steuerroutine umzuwandeln, bzw. Steuerbefehle zu definieren, die an die entsprechende Antriebseinrichtung des entsprechenden Transportstreckenabschnittes übertragen werden, um den jeweiligen Transportportstreckenabschnitt abhängig von den mittels der Steuerroutine erzeugten Steuerdaten gesteuert anzutreiben.

Vorteilhafter Weise kann die Prozesseinheit auch dazu eingerichtet sein, die Ist-Steuerdaten aus dem Nennstrom zu ermitteln, der zum Betreiben der jeweiligen Antriebseinrichtung notwendig ist.

Wiederum bevorzugt kann die Prozesseinrichtung dazu eingerichtet sein, die jeweiligen Antriebseinrichtungen in einer Master-Slave-Kopplung zu betreiben.

Bevorzugt sind die wenigstens zwei Antriebseinrichtungen jeweils als getriebelose Elektromotoren in Form von Servomotoren ausgebildet.

Weiterhin bevorzugt kann die Transportstrecke einen geraden und/oder kurvengängigen Verlauf aufweisen. Bei einem kurvengängigen Verlauf der Transportstrecke kann bevorzugt die wenigstens eine Antriebseinrichtung vor einer jeweiligen Kurve angeordnet sein. Es kann vorteilhaft auch vorgesehen sein, dass sowohl vor als auch nach der jeweiligen Kurve eine Antriebseinrichtung vorgesehen ist.

In einer nochmals weiteren Ausführungsvariante können auch wenigstens zwei Transportelemente vorgesehen sein, die mehrzügig zur Transportrichtung und einander benachbart vorgesehen sind. Hierbei können vorteilhaft für jedes einzelne der mehreren Transportelementen jeweils mindestens zwei Antriebseinrichtungen vorgesehen sein. Dabei können den mehreren Transportelementen die mindestens zwei Antriebseinrichtungen gemeinsam zugeordnet sein, derart, dass jedes einzelne der mehreren Transportelemente jeweils von wenigstens zwei Antriebseinrichtungen angetrieben wird.

Die mehreren Transportelementabschnitte sind drehbeweglich und relativ zueinander verschiebbar ausgebildet. In einer Ausführungsvariante kann das wenigstens eine Transportelement hierfür als Transportkette ausgebildet sein, die mehrere Kettenglieder aufweist.

Es kann vorteilhaft vorgesehen sein, dass die Prozesseinheit dazu eingerichtet ist, die den wenigstens zwei Transportstreckenabschnitten jeweils zugeordneten Antriebseinrichtungen mit unterschiedlichen Soll-Steuerungsdaten anzusteuern. Insbesondere kann die Prozesseinheit dazu eingerichtet sein, in Transportrichtung gesehen aufeinander folgende Transportstreckenabschnitte derart anzusteuern, dass ein in Transportrichtung gesehen vorderer Transportstreckenabschnitt mit einer im Vergleich zu einem in Transportrichtung gesehen rückwärtigen Transportstreckenabschnitt mit einer höheren Soll-Drehzahl betrieben wird.

Auch kann die Prozesseinheit vorteilhaft dazu eingerichtet sein, in Transportrichtung gesehen aufeinander folgende Transportstreckenabschnitte derart anzusteuern, dass ein in Transportrichtung gesehen vorderer Transportstreckenabschnitt mit einer im Vergleich zu einem in Transportrichtung gesehen rückwärtigen Transportstreckenabschnitt mit einer geringeren Soll-Drehzahl betrieben.

In nochmals weiteren Ausführungsvariante kann vorgesehen sein, dass die Soll-Steuerungsdaten in der Prozesseinheit derart voreingestellt sind, dass der jeweilige Transportstreckenabschnitt vollständig gelängt und/oder vollständig eingefahren ist.

Auch kann bevorzugt vorgesehen sein, dass die Soll-Steuerungsdaten in der Prozesseinheit derart voreingestellt sind, dass eine Längung und/oder Komprimierung eines Transportstreckenabschnittes erst dann erfolgt, wenn die Längung und/oder Komprimierung des wenigstens einen weiteren Transportstreckenabschnittes vollständig erfolgt ist

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1a und 1b: eine schematische Seitenansicht bzw. Unteransicht einer erfindungsgemäßen Transportvorrichtung
- Fig. 2: in schematischer Darstellung eine der mit seinem Stator auf einer Achse drehfest angeordneten Antriebseinheiten der Transportvorrichtung gemäß der Figuren 1a und 1b;
- Fig. 3: eine schematische Unteransicht einer erfindungsgemäßen Transportvorrichtung mit mehreren Transportelementen
- Fig. 4: eine schematische Seitenansicht eines beispielhaften Transportelementes
- Fig. 5: eine schematische Draufsicht eines beispielhaften Transportelementes gemäß Fig. 4
- Fig. 6a und 6b: eine schematische Draufsicht auf ein weiteres beispielhaftes Transportelement in eingefahren bzw. ausgefahrenen Zustand
- Fig. 7: eine schematische Seitenansicht einer Ausführungsvariante einer erfindungsgemäßen Transportvorrichtung mit einem beispielhaften Transportelement gemäß Figuren 4 und 5.

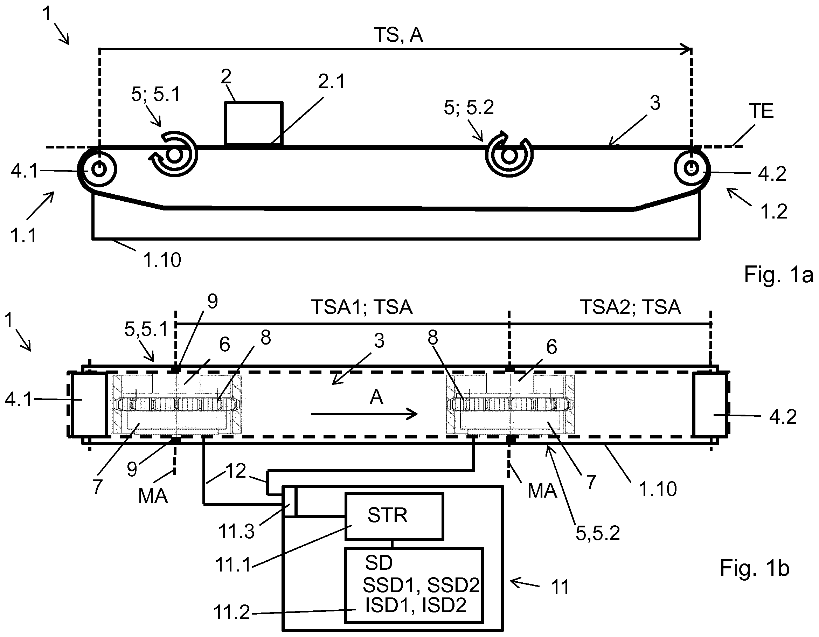

Die in der Fig. 1 allgemein mit 1 bezeichnete Transportvorrichtung dient bespielweise zum Transportieren von Transportgut 2 in wenigstens einer Transportrichtung A zwischen jeweils nicht nähergehend dargestellten Behälterbehandlungsmaschinen und/oder Überschubstationen und/oder Transferstationen und/oder Überleitstationen für die Verpackungs- und/oder Getränkeindustrie.

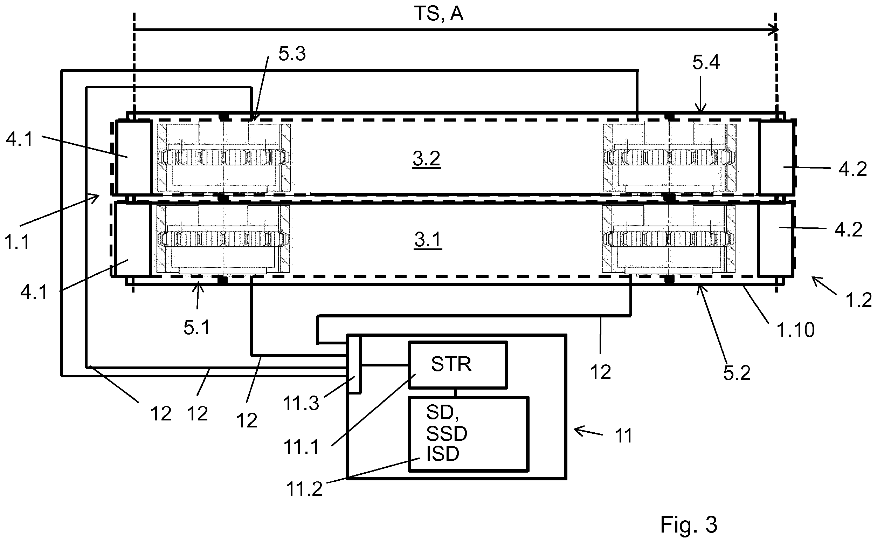

Die Transportvorrichtung 1 umfasst hierfür wenigstens ein, als geschlossene Schlaufe ausbildendes und endlos umlaufend angetriebenes Transportelement 3, das beispielweise als Transportriemen, Transportkette, Scharnierbandkette oder andere, für den Transport des Transportgutes 2 geeignete Transportelemente, ausgebildet sein kann. Dabei können in einer Ausführungsvariante, gezeigt in Figur 3, auch mehrere, also wenigstens zwei, Transportelemente 3 vorgesehen sein, die mehrzügig, d.h. quer oder senkrecht zur Transportrichtung A einander benachbart angeordnet sind, sodass die mehreren Transportelemente 3 zumindest mit einem Teil ihrer jeweils oberen Länge ihrer entsprechenden Schlaufe eine gemeinsame, beispielsweise horizontale Transportfläche in einer Transportebene TE ausbilden, auf der das Transportgut 2 mit seiner Bodenfläche 2.1 zumindest teilweise aufstehen kann.

An dem bezogen auf die Transportrichtung A vorderen Ende 1.1 sowie bezogen auf die Transportrichtung A rückwärtigen Ende 1.2 ist das wenigstens eine Transportelement 3 jeweils über Umlenkeinrichtungen 4.1, 4.2 geführt, wobei das wenigstens eine Transportelement 3 insbesondere an seinem vorderen Ende 1.1 über eine vordere Umlenkeinrichtung 4.1 und an seinem rückwärtigen Ende 1.2 über eine rückwärtige Umlenkeinrichtung 4.2 geführt ist und sich zwischen der vorderen und der rückwärtigen Umlenkeinrichtung 4.1, 4.2 mittels des wenigstens einen Transportelementes 3 eine Transportstrecke TS für das Transportgut 2 ausbildet. Die vordere und rückwärtige Umlenkreinrichtung 4.1, 4.2 befindet sich dabei insbesondere unterhalb der Transportebene TE angeordnet. Die Umlenkeinrichtungen 4.1, 4.2 sind als Umlenkrollen ausgebildet, die sich drehbar gelagert an einem Maschinenrahmen 1.10 der Transportvorrichtung 1 angeordnet befinden.

Eine Besonderheit der Transportvorrichtung 1 besteht darin, dass zum Antreiben des wenigstens einen Transportelementes 3 mindestens zwei Antriebseinrichtungen 5 vorgesehen sind, die beabstandet zueinander an unterschiedlichen Stellen entlang der Transportstrecke TS mit dem wenigstens einen Transportelement 3 in Wirkverbindung stehen. In der in Figur 1 dargestellten Ausführungsvariante der erfindungsgemäßen Transportvorrichtung 1 sind eine erste Antriebseinrichtung 5.1 sowie eine zweite Antriebseinrichtung 5.2 zum Antreiben des wenigstens einen Transportelementes 3 vorgesehen, wobei beide Antriebseinrichtungen 5.1 und 5.2 beispielhaft unterhalb der Transportebene TE ebenfalls an dem Maschinenrahmen 1.10 angeordnet sein können. Genauer ist dabei die erste Antriebseinrichtung 5.1 im Bereich der vorderen Umlenkeinrichtung 4.1 bzw. dem vorderen Ende 1.1 vorgesehen, während die zweite Antriebseinrichtung 5.2 im Bereich des der zweiten Umlenkeinrichtung 4.2 bzw. dem rückwärtigen Ende 1.2 angeordnet ist. Zur Ansteuerung der ersten und zweiten Antriebeinheit 5.1, 5.2 können diese jeweils über eine Steuerleitung 12 mit einer Steuereinheit 11 in Wirkverbindung stehen.

Dabei umfasst die Transportstrecke TS wenigstens zwei Transportstreckenabschnitte TSA, die sich jeweils zwischen zwei in Transportrichtung A aufeinander folgenden Antriebseinrichtungen 5 erstrecken. Es sind zwei Transportstreckenabschnitte TSA vorgesehen, wobei sich ein erster Transportstreckenabschnitt von der ersten Antriebseinrichtung 5.1 in Transportrichtung A bis zur zweiten Antriebseinrichtung 5.2 und sich ein zweiter Transportstreckenabschnitt TSA2 von der zweiten Antriebseinrichtung 5.2 bis zum in Transportrichtung A gesehen rückwärtigen Ende der Transportstrecke TS erstreckt.

Dabei ist das Wesen der Erfindung jedoch ausdrücklich nicht auf die in Figur 1 dargestellte Ausführungsvariante einer Anzahl von zwei Antriebseinrichtungen 5.1, 5.2 für das jeweilige Transportelement 3 beschränkt. Vielmehr ist es im Rahmen der vorliegenden Erfindung auch möglich, beispielweise abhängig von der Dimensionierung der Transportvorrichtung 1, also insbesondere abhängig von der Länge der Transportstrecke TS oder der zu befördernden Masse des Transportgutes 2 oder aber auch der gewünschten geometrischen Ausgestaltung der Transportstrecke TS mit geradem oder kurvigem Verlauf, drei, vier, fünf oder mehr Antriebseinheiten 5 für das jeweilige, jedoch wenigstens eine Transportelement 3 vorzusehen.

Ist die Transportstrecke TS und damit auch das wenigstens eine Transportelement 3 der Transportvorrichtung 1 kurvengängig ausgebildet, so kann vorgesehen sein, dass, bezogen auf die Transportrichtung A, wenigstens eine Antriebseinrichtung 5 vor der jeweiligen Kurve zum Antreiben des wenigstens einen Transportelementes 3 vorgesehen ist. Besonders bevorzugt kann dabei auch vor und nach der jeweiligen Kurve der Transportstrecke TS eine Antriebseinrichtung 5.1, 5.2 für das wenigstens eine Transportelement 3 vorgesehen sein.

In einer nicht erfindungsgemäßen Ausführungsvariante der Transportvorrichtung 1 kann die erste Antriebseinrichtung 5.1 gleichzeitig auch die vordere Umlenkeinrichtung 4.1 und die zweite Antriebseinrichtung 5.2 die rückwärtige Umlenkeinrichtung 4.2 ausbilden, derart, dass sowohl der umlaufende Antrieb als auch die Umlenkung des Transportelementes 3 als umlaufend geschlossene Schlaufe durch die erste und zweite Antriebseinrichtung 5.1, 5.2 bewerkstelligt wird. In anderen Worten übernimmt dabei die erste und zweite Antriebseinrichtung 5.1, 5.2 in dieser Ausführungsvariante der Transportvorrichtung 1 auch die Funktionalität der Umlenkvorrichtungen 4.1, 4.2.

Dabei kann die jeweilige Antriebseinrichtung 5.1, 5.2 als Elektromotor, vorzugsweise als getriebeloser Elektromotor, beispielweise in Form eines direkt angetriebenen Elektromotors, bevorzugt in Form eines Schrittmotors, eines Servomotors oder eines Torquemotors, ausgebildet sein. Bei der dargestellten Ausführungsform der Transportvorrichtung 1 mit insgesamt einem Transportelement 3 sind also wenigstens zwei Antriebseinheiten, nämlich die erste und die zweite Antriebseinrichtung 5.1, 5.2 in Form jeweils eines Elektromotors verwendet, der beispielsweise einen innenliegenden, mit dem Maschinenrahmen 1.1 der Transportvorrichtung 1 drehfest verbundenen Stator 6 und einen außenliegenden Rotor 7 aufweist. Letzterer kann bevorzugt bei Verwendung von Transportelementen 3 in Form von Ketten an seiner Umfangsfläche mit einer Kettenverzahnung 8 versehen sein, die die senkrecht zur Transportrichtung A orientierte Motorachse MA konzentrisch umschließt. Dabei bilden die erste und zweite Antriebseinrichtung 5.1, 5.2 die Antriebseinheit der Transportvorrichtung 1. Jeder Rotor 7 kann dabei insbesondere mit seiner entsprechenden Verzahnung 8 die Wirkverbindung mit dem wenigstens einen Transportelement 3 herstellen.

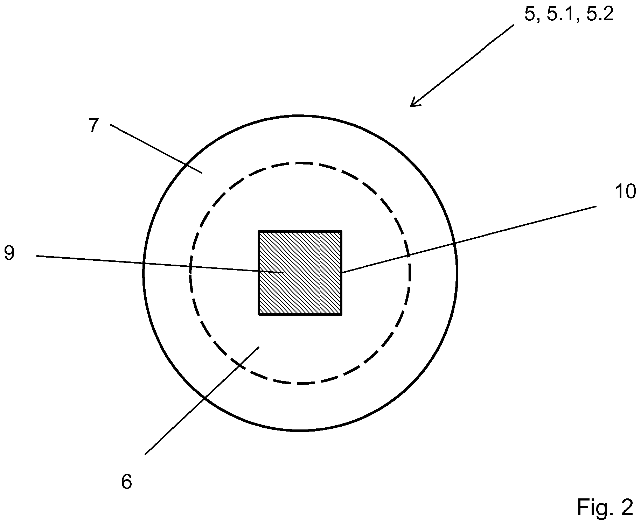

Bei der in den Figuren 1a und 2b dargestellten Ausführungsform können entsprechend der Figur 2b die Statoren 6 der ersten und zweiten Antriebseinheit 5.1, 5.2 jeweils auf einem Träger in Form einer Tragachse 9 angeordnet sein, die beidendig jeweils am Maschinenrahmen 1.10 verdrehungssicher gehalten sind. Der Stator 6 jeder Antriebseinheit 5.1, 5.2 kann mit einer Ausnehmung oder Durchbrechung 10 versehen sein, die einen von der Kreisform abweichenden Querschnitt besitzen kann, bei der dargestellten Ausführungsform beispielweise einen quadratischen Querschnitt aufweist, an den der Querschnitt der Tragachse 9 angepasst ist, sodass die entsprechenden Statoren 6 der ersten und zweiten Antriebseinrichtung 5.1, 5.2 verdrehungssicher an der entsprechenden Tragachse 9 und über diese auch verdrehungssicher am Maschinenrahmen 1.1 gehalten sind.

Alternativ können die Antriebseinheiten 5.1, 5.2 auch beispielsweise außenseitig am Maschinenrahmen 1.10 angeordnet sein und mittels ihres jeweiligen Rotors 7 eine Drehbewegung auf eine nicht näher dargestellte Antriebswelle übertragen, die mit dem wenigstens einen Transportelement 3 in Wirkverbindung steht, indem die Antriebswelle insbesondere einen Kraftschluss zwischen der entsprechenden Antriebseinrichtung 5.1, 5.2 und dem jeweiligen Transportelement 3 herstellt.

Die Ansteuerung der ersten und zweiten Antriebseinrichtung 5.1, 5.2 erfolgt dabei über die gemeinsame Steuereinheit 11, die beispielsweise die Maschinensteuerung oder ein Teil der Maschinensteuerung der Transportvorrichtung 1 oder einer die Transportvorrichtung 1 aufweisenden Anlage ist. Erfindungsgemäß werden die erste und zweite Antriebseinrichtung 5.1, 5.2 in Abstimmung zueinander mittels der Steuereinheit 11 gesteuert und/oder geregelt**.**

In einer Ausführungsvariante kann dabei vorgesehen sein, dass die Prozesseinrichtung 11.1 dazu eingerichtet ist, die jeweiligen Antriebseinrichtungen 5 in einer Master-Slave-Kopplung zu betreiben. Beispielsweise können die erste und zweite Antriebseinrichtung 5.1, 5.2 in einer Master-Slave-Kopplung betrieben werden, indem beispielsweise die erste Antriebseinrichtung 5.1 mittels der Steuereinheit 11 als Master, also Leitantrieb, und die zweite Antriebseinrichtung 5.2 mittels der Steuereinheit 11 einen mit dem Master gekoppelten Slave, also Folgeantrieb, ausbildet. Es kann dabei vorgesehen sein, dass sich die Antriebseinheiten 5.1, 5.2 in ihrer Funktion als Master abwechseln. Insbesondere wird damit eine Synchronisation der beiden Antriebseinheiten 5.1, 5.2 sichergestellt.

Beispielweise kann die Ansteuerung der ersten und zweiten Antriebseinrichtung 5.1, 5.2 durch eine Steuerroutine STR gesteuert erfolgen, die in der Steuereinheit 11 ausgeführt wird. Die Steuereinheit 11 kann hierzu beispielsweise wenigstens eine Prozessoreinheit 11.1 zur Ausführung der Steuerroutine STR aufweisen. Ferner weist die Steuereinheit 11 beispielsweise eine mit der Prozessoreinheit 11.1 zusammenwirkende Speichereinheit 11.2 zum zumindest zeitweisen Speichern Steuerungsdaten SD auf, die beispielsweise über eine Schnittstelle 11.3 von der Steuereinheit 11 über die Steuerleitungen 12 an die erste und zweite Antriebseinheit 5.1, 5.2 übertragen und/oder empfangen werden.

Die Steuerdaten SD umfassen insbesondere aktuell an der ersten und zweiten Antriebseinrichtung 5.1, 5.2 ermittelte Ist-Steuerdaten ISD1, ISD2 wie beispielweises eine jeweilige Ist-Drehzahl IDZ1, IDZ2, Ist-Drehrichtung IDR1, DR2, Ist-Drehwinkel IDW1, IDW2 sowie Ist-Drehmoment IDM1, IDM2, sowie entsprechende Soll-Steuerdaten SSD1, SSD 2wie beispielweise eine Soll-Drehzahl SDZ1, SDZ2, Soll-Drehrichtung SDR1, SDR2, Soll-Drehwinkel SDW1, SDW2 sowie Soll-Drehmoment SDM1, SDM2. Dabei sind die mit Index 1 versehenen Parameter der ersten Antriebseinrichtung 5.1 und die mit Index 2 versehenen Parameter der zweiten Antriebseinheit 5.2 zuzuordnen. Sind dabei in weiteren Ausführungsvarianten der Erfindung weitere Antriebseinrichtungen vorgesehen, so wird auch für diese Antriebseinrichtungen ein entsprechender Parametersatz an Ist- und Soll-Daten mit einem entsprechenden Index als Steuerungsdaten SD in der Steuereinheit 11 hinterlegt. Insbesondere kann die Prozesseinheit 11.1 dazu eingerichtet sein, die Ist-Steuerdaten ISD aus dem Nennstrom zu ermitteln, der zum Betreiben der jeweiligen Antriebseinrichtung 5.1, 5.2 notwendig ist, um eine entsprechende Antriebsbewegung mittels des wenigstens einen Transportelementes 3 zu erzeugen. Auch kann aus der zeitlichen Änderung des Nennstromes und/oder der Leistungsaufnahme bzw. dessen zeitlichen Änderung der Leistungsaufnahme der wenigstens zwei Antriebseinrichtungen 5.1, 5.2 auf die von dem wenigsten einen Transportelement 3 erzeugte Antriebsbewegung geschlossen werden.

Die Prozessoreinheit 11.1 ist insbesondere dazu eingerichtet, über die Schnittstelle 12.3 empfangene Ist-Steuerdaten ISD mit Soll-Steuerdaten SSD zu vergleichen und abhängig davon in Steuerdaten SD für die Steuerroutine STR umzuwandeln, bzw. Steuerbefehle zu definieren, die an die entsprechende Antriebseinrichtung (5) des entsprechenden Transportstreckenabschnittes TSA übertragen werden, um den jeweiligen Transportportstreckenabschnitt TSA abhängig von den mittels der Steuerroutine STR erzeugten Steuerdaten SD gesteuert anzutreiben.. In der Speichereinheit 10.2 können auch bereits vordefinierte, also vorgegebene, Soll-Steuerdaten SSD hinterlegt sein.

Unterschiedlich zu der Ausführungsvariante der Figuren 1a, 1b und 2 zeigt Figur 3 in einer schematischen Unteransicht eine Ausführungsvariante der erfindungsgemäßen Transportvorrichtung 1 mit mehreren Transportelementen 3, insbesondere einem ersten und einem zweiten Transportelement 3.1, 3.2, die jeweils als geschlossene Schlaufe ausgebildet sind. Erfindungsgemäß sind dabei für ein jedes der beiden Transportelemente 3.1, 3.2 jeweils zumindest zwei Antriebseinrichtungen 5.1, 5.2 bzw. 5.3, 5.4 vorgesehen, die entsprechend beabstandet zueinander an unterschiedlichen Stellen entlang der Transportstrecke TS mit dem jeweiligen Transportelement 3.1, 3.2 in Wirkverbindung stehen. Genauer sind dabei für das erste Transportelement 3.1 die erste und zweite Antriebseinrichtung 5.1 und 5.2 vorgesehen, während für das zweite Transportelement 3.2 eine dritte und eine vierte Antriebseinrichtung 5.3, 5.4 vorsehen sind. Eine jede der in dieser Ausführungsvariante vorgesehenen vier Antriebseinrichtungen 5.1 bis 5.4 steht dabei über Steuerleitungen 12 mit der Steuereinheit 11 in Wirkverbindung. Weiterhin sieht die Transportvorrichtung 1 dieser Ausführungsvariante am vorderen Ende 1.1 zwei vordere Umlenkeinrichtung 4.1 sowie am rückwärtigen Ende 1.2 zwei rückwärtige Umlenkeinrichtungen 4.2 vor, die beispielweise auf jeweils auf einer gemeinsamen, nicht näher dargestellten, Achse drehbeweglich an dem Maschinenrahmen 1.10 angeordnet sein können. Insbesondere können dabei die vorderen bzw. rückwärtigen jeweils zwei Umlenkeinrichtungen 4.1, 4.2 auf ihrer jeweiligen Achse jeweils unabhängig zueinander drehbeweglich an ihrer entsprechenden Achse angeordnet sein, derart, dass unterschiedliche Transportgeschwindigkeiten mit dem ersten und zweiten Transportelement 3.1, 3.2 realisierbar sind.

In einer alternativen, in Figur 3 nicht dargestellten, Ausführungsvariante kann auch vorgesehen sein, dass den mehreren Transportelementen 3, beispielweise dem ersten und dem zweiten Transportelement 3.1, 3.2, die erste und zweite Antriebseinrichtung 5.1, 5.2 jeweils gemeinsam, also beispielsweise sowohl dem ersten als auch dem zweiten Transportelement 3.1, 3.2, zugeordnet ist, derart dass jedes einzelne der mehreren Transportelemente 3 jeweils von wenigstens zwei Antriebseinheiten, nämlich der ersten Antriebeinheit 5.1 sowie der zweiten Antriebseinheit 5.2, angetrieben wird. Damit kann also beispielweise das erste und zweite Transportelement 3.1, 3.2 an seinem vorderen Ende 1.1 beispielsweise mit der ersten Antriebseinrichtung 5.1 und an seinem rückwärtigen Ende 1.2 mit beispielsweise der zweiten Antriebseinrichtung 5.2 in Wirkverbindung stehen, so dass weiterhin erfindungsgemäß jedes einzelne Transportelement 3.1 bzw. 3.2 mit wenigstens zwei Antriebseinheiten 5.1, bzw. 5.2 in Wirkverbindung steht, die jedoch von beiden Transportelemente 3.1, 3.2 gemeinsam genutzt werden. Beispielsweise kann die jeweilige Antriebseinrichtung 5.1, 5.2 hierfür jeweils eine Antriebswelle antreiben, die jeweils sowohl mit dem ersten als auch mit dem zweiten Transportelement 3.1, 3.2 in Wirkverbindung steht.

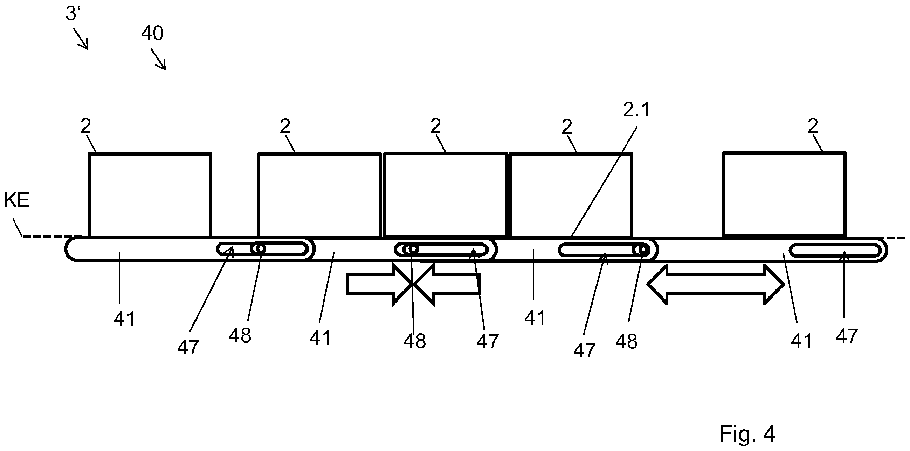

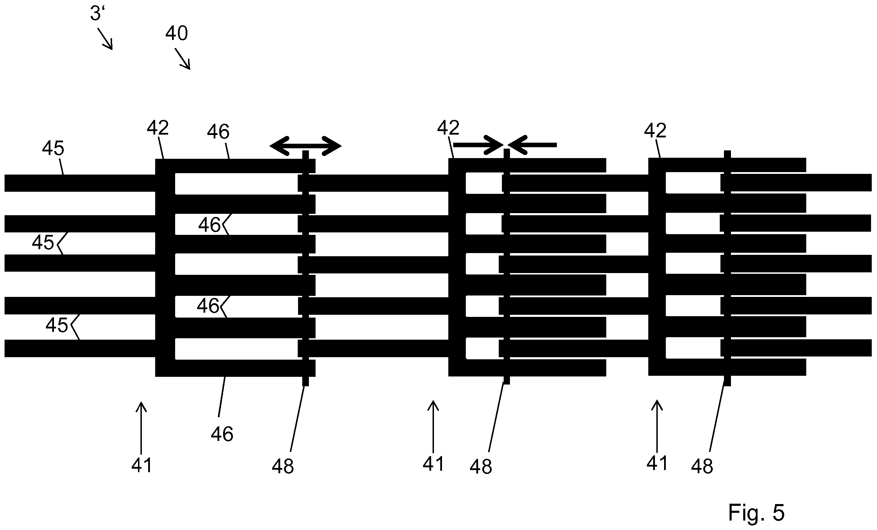

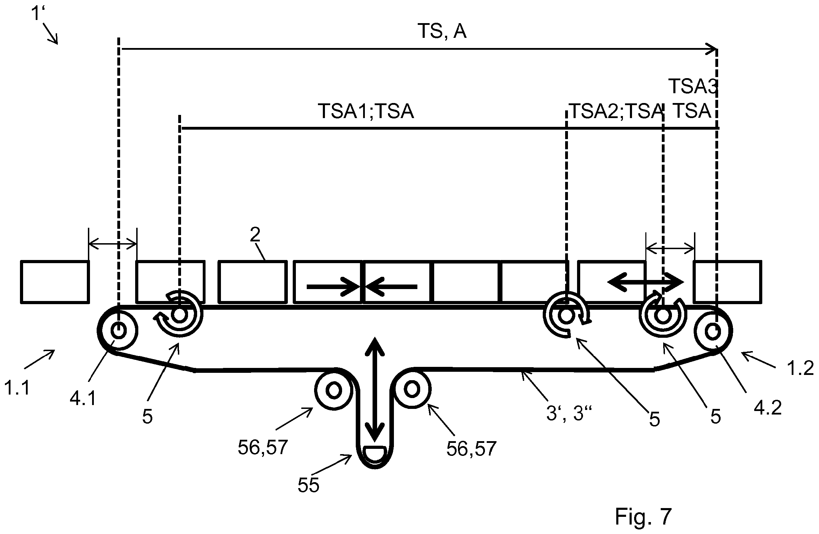

Die Figuren 4 und 5 zeigen beispielhaft in einer schematischen Seitenansicht bzw. Draufsicht ein Transportelement 3' für eine weitere Ausführungsvariante der erfindungsgemäßen Transportvorrichtung 1', näher dargestellt und beschrieben in Figur 7. Dabei weist das Transportelement 3' der Figuren 4 und 5 insbesondere mehrere drehbeweglich und relativ zueinander verschiebbar angeordnete Transportelementabschnitte auf, so dass durch eine relative Verschiebung der einzelnen Transportelementabschnitte zueinander die Gesamtlänge des Transportelementes 3' variierbar, also verlänger- als auch komprimierbar, ist. Insbesondere kann dabei das Transportelement 3' als Transportkette 40 ausgebildet sein, die mehrere Kettenglieder 41, d. h. Transportelementabschnitte, aufweist, die untereinander sowohl drehbeweglich als auch relativ zueinander verschiebbar angeordnet sind, derart, dass die Gesamttransportkettenlänge durch die relative Verschiebung der einzelnen Kettenglieder 41 zueinander variierbar, also verlängerbar als auch komprimierbar, ist. Die Schiebebeweglichkeit ist in den Figuren 4 und 5 auch durch entsprechende Pfeile gekennzeichnet, bzw. deutlich gemacht.

Mehr im Detail weisen die einzelnen Kettenglieder 41 jeweils einen sich länglich erstreckenden Trägerabschnitt 42 auf, an dem sich entlang seiner Längserstreckung beidseitig und jeweils um 180° abgewandt zueinander sowohl ein erster als auch ein zweiter Kettengliedabschnitt 43, 44 abzweigt, der jeweils durch mehrere parallel zueinander angeordnete Kettengliederelemente 45, 46 gebildet werden kann. Damit spannen die Kettengliederelemente 45 des ersten Kettengliedabschnittes 43 und die Kettengliederelemente 46 des zweiten Kettengliedabschnittes 44 letztlich eine gemeinsamen Kettengliederebene KE auf, die mit der Transportebene TE zusammenfällt. In der dargestellten Ausführungsvariante der Figuren 4 und 5 sind dabei insbesondere 5 Kettengliederelemente 45 sowie 6 Kettengliederelemente 46 vorgesehen, die jeweils in gleichem oder annähernd gleichem Abstand und parallel zueinander an dem gemeinsamen Trägerabschnitt 42 angeordnet sind und damit ein einzelnes Kettenglied 41 ausbilden.

Wie insbesondere der Figur 5 entnehmbar, weisen die jeweiligen Kettenglieder 41, insbesondere deren jeweilige Kettengliederelemente 46 des zweiten Kettengliedabschnittes 44 vorzugsweise parallel der Kettengliederebene KE verlaufende Schlitze 47 in Form von Durchbrechungen auf, in denen ein an den Kettengliederelementen 45 des ersten Kettengliedabschnittes 43 angeordneter jeweiliger Bolzen 48 eingreift, der ebenfalls parallel der Kettengliederebene KE verlaufen kann. Insbesondere greift dabei der Bolzen 48 eines Kettengliedes 41 in die Schlitze 47 eines benachbarten Kettengliedes 41, derart, dass dadurch eine relative Verschiebung der einzelnen Kettenglieder 41 zueinander ermöglicht wird, indem die jeweiligen Bolzen 48 entlang der entsprechende Schlitze 47 verschoben werden. Letztlich wird durch diese relative Verschiebung der einzelnen Kettenglieder 41 zueinander die Gesamtlänge der Transportkette 40 veränderbar, also variierbar.

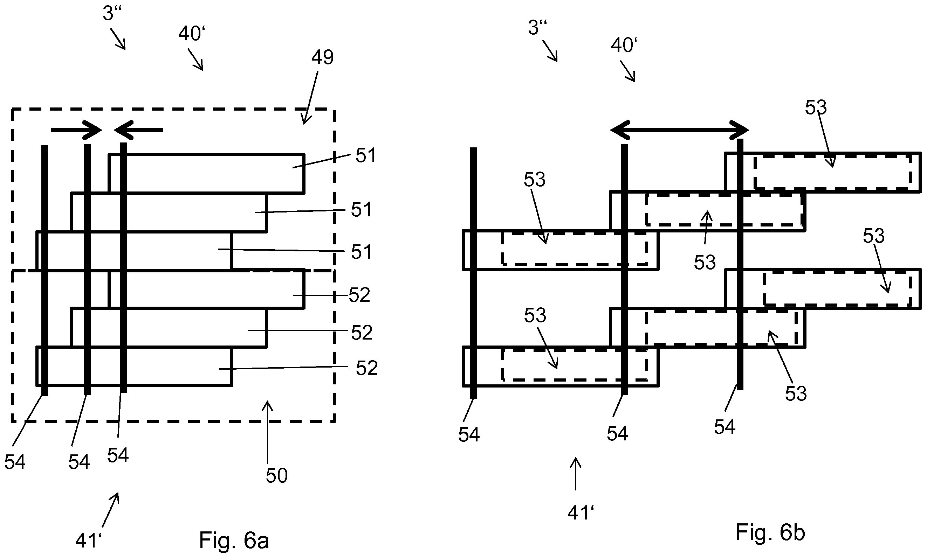

Die Figuren 6a und 6b zeigen in einer schematischen Draufsicht ein weiteres beispielhaftes Transportelement 3", bei dem im Unterschied zu der Ausführungsvariante der Figuren 4 und 5 die einzelnen Transportelementabschnitte zusätzlich in sich drehbeweglich und längenveränderlich, also verlängerbar als auch komprimierbar, ausgebildet sind. Auch in dieser Ausführungsvariante der Figuren 6a und 6b weist das Transportelement 3" mehrere drehbeweglich und relativ zueinander verschiebbar angeordnete Transportelementabschnitte auf, so dass durch eine relative Verschiebung der einzelnen Transportelemente zueinander die Gesamtlänge des Transportelementes 3' variierbar, also verlängerbar als auch komprimierbar, ist. Indem die einzelnen Transportelementabschnitte auch noch zusätzlich in sich längenveränderlich sowie drehbeweglich ausgebildet sind, wird eine im Vergleich zu der Ausführungsvariante der Figuren 4 und 5 weiter gesteigerte Längenvariabilität des gesamten Transportelementes 3" erreicht.

Insbesondere kann dabei auch das Transportelement 3" der Figuren 6a und 6b als Transportkette 40' ausgebildet sein, die mehrere Kettenglieder 41', d. h. Transportelementabschnitte aufweist, die untereinander sowohl drehbeweglich als auch relativ zueinander verschiebbar angeordnet sind, derart, dass die Gesamttransportkettenlänge durch die relative Verschiebung der einzelnen Kettenglieder 41' zueinander variierbar ist. Die Darstellung der Figuren 6a und 6b zeigen dabei ein einziges Kettenglied 41' in einem eingefahrenen Zustand, dargestellt in Figur 6a, sowie in einem ausgefahrenen Zustand, dargestellt in Figur 6b.

Mehr im Detail weist das Kettenglied 41' ein erstes Kettengliedsegment 49 sowie ein zweites Kettengliedsegment 50 auf, das in der Abbildung der Figur 6a erkennbar ist. Sowohl das erste, als auch das zweite Kettengliedsegment 49, 50 weist wiederum einzelne Kettengliederelemente 51, 52 auf, wobei die Kettengliederelemente 51 dem ersten Kettengliedsegment 49 und die Kettengliederelemente 52 dem zweiten Kettengliedsegment 50 zugeordnet sind. Weiterhin weist ein jedes Kettengliedelement 51, 52 einen nur schematisch in Figur 6b angedeuteten Schlitz 53 in Form einer Durchbrechung auf, der sich im Wesentlichen entlang der Längserstreckung der Kettengliederelemente 51, 52 erstreckt. An der dem jeweiligen Schlitz 53 jeweils abgewandten Seite ist dabei zwischen entsprechenden Kettengliederelementen 51 bzw. deren zugehörigen Schlitzen 53 des ersten Kettengliedabschnittes 49 und den dazu korrespondierten Kettengliederelementen 52 bzw. deren zugehörigen Schlitzen 53 des zweiten Kettengliederabschnittes 50 jeweils ein Bolzen 54 angeordnet bzw. durchgeführt. Die vorgesehenen Bolzen 54 sind dabei insbesondere verschiebbar entlang der entsprechenden Schlitze 53 vorgesehen, so dass das Kettenglied 41' insbesondere längenveränderlich zwischen einer in Figur 6a dargestellten eingefahrenen Position und einer in Figur 6b dargestellten ausgefahrenen Position ausgebildet ist.

Die Figur 7 zeigt in einer schematischen Seitenansicht eine weitere Ausführungsvariante einer erfindungsgemäßen Transportvorrichtung 1' gemäß den Figuren 1a und 1b, die sich im Wesentlichen dadurch unterscheidet, dass an der Transportvorrichtung 1' gemäß der Figur 7 ein Transportelement 3', 3" gemäß der Figuren 4, 5, 6a oder 6b vorgesehen ist. Ferner sieht die Transportvorrichtung 1' zum Antreiben des wenigstens einen Transportelementes 3', 3"drei Antriebseinrichtungen 5 vor, die beabstandet zueinander an unterschiedlichen Stellen entlang der Transportstrecke TS mit dem wenigstens einen Transportelement 3', 3" in Wirkverbindung stehen. Aus Übersichtlichkeitsgründen ist dabei auf die Darstellung der Steuereinheit verzichtet worden, die jedoch auch in der Ausführungsvariante der Figur 7 vorhanden ist und mit jedem der drei Antriebseinrichtungen 5 über ebenfalls nicht dargestellte Steuerleitungen in Wirkverbindung steht. Die Steuereinheit ist dabei gemäß der Beschreibung zu Figuren 1a und b ausgebildet.

Dabei umfasst die Transportstrecke TS wenigstens zwei Transportstreckenabschnitte TSA, die sich jeweils zwischen zwei in Transportrichtung A aufeinander folgenden Antriebseinrichtungen 5 erstrecken. Ein jeder Transportstreckenabschnitt TSA ist aus mehreren Transportelementabschnitten, also beispielweise Kettengliedern 41, 41' der Transportelemente 3', 3", gebildet.

In der dargestellten Ausführungsvariante der Figur 7 sind dabei beispielhaft und exemplarisch ein erster Transportstreckenabschnitt TSA1, ein zweiter Transportstreckenabschnitt TSA2 sowie ein dritter Transportstreckenabschnitt TSA3 vorgesehen. Dabei kann auch vorgesehen sein, dass einem Transportstreckenabschnitt TSA mehrere Antriebseinrichtungen 5 zugeordnet sind, d. h. ein Transportstreckenabschnitt TSA also aus mehreren Transportstreckenabschnitten TSA zusammengefasst ist. Dabei ist die in Transportrichtung A gesehen im vorderen Ende 1.1 angeordnete Antriebseinrichtung 5 dem ersten Transportstreckenabschnitt TSA1, die mittlere Antriebseinrichtung 5 dem zweiten Transportstreckenabschnitt TSA2 sowie die im rückwärtigen Ende 1.2 angeordnete Antriebseinrichtung 5 dem dritten Transportstreckenabschnitt TSA3 zugeordnet.

Insbesondere kann in dieser Ausführungsvariante jeder Transportstreckenabschnitt TSA mittels der ihm zugeordneten Antriebseinrichtung 5 betrieben werden und das insbesondere mit im Vergleich zu den weiteren vorgesehenen Antriebseinrichtungen 5 abgestimmten Soll-Steuerungsdaten SSD, also beispielweise Soll-Drehzahl SDZ, Soll-Drehwinkel SDW oder Soll-Drehmoment SDM.

Beispielsweise kann vorgesehen, dass die Transportstreckenabschnitte TEA in Abstimmung zueinander mit unterschiedlichen Soll-Steuerungsdaten SSD, beispielweise einer unterschiedlichen Soll-Drehzahl SDZ, mittels der Steuereinheit 11 angesteuert werden. Durch die Ausbildung des Transportelementes 3', 3" gemäß der Ausführungsvarianten der Figuren 4, 5, 6a oder 6b können damit auf der Transportstrecke TS einzelne Transportstreckenabschnitte TSA mit unterschiedlichen Zusatzeigenschaften, wie beispielsweise Akkumulation oder Lückenbildung zwischen dem jeweiligen Fördergut 2, realisiert werden.

Beispielsweise kann der erste Transportstreckenabschnitt TSA1 mit einer im Vergleich zum zweiten Transportstreckenabschnitt TSA2 höheren Soll-Drehzahl SDZ betrieben werden. Dadurch kommt es entlang des ersten Transportstreckenabschnittes TSA1 zu einer Stauchung der Länge des Transportelementes 3', 3" und dadurch zu einer Akkumulation der auf diesem ersten Transportstreckenabschnitt TSA1 der Transportstrecke TS befindlichen Transportgütern 2.

Weiterhin kann dann beispielweise der dritte Transportstreckenabschnitt TSA3 wiederum mit einer im Vergleich zum zweiten Transportstreckenabschnitt TSA2 höheren Soll-Drehzahl SDZ betrieben werden. Dies führt entlang des zweiten Transportstreckenabschnittes TSA2 zu einer Dehnung der Länge des Transportelementes 3', 3" und dadurch zu einer Lückenbildung der auf diesem zweiten Transportstreckenabschnitt TSA2 der Transportstrecke TS befindlichen Transportgütern 2. In anderen Worten kann also durch eine gezielte Ansteuerung benachbarter Transportstreckenabschnitte TSA mit einer Differenzgeschwindigkeit mittels der jeweiligen Antriebseinrichtungen 5 eine Akkumulation bzw. Lückenbildung der jeweils auf diesem Transportstreckenabschnitt TSA befindlichen Transportgüter 2 erreicht werden.

In einer Ausführungsvariante kann dabei vorgesehen sein, dass die Soll-Steuerungsdaten SSD in der Prozesseinheit 11.1 derart voreingestellt sind, dass der jeweilige Transportstreckenabschnitt TSA vollständig gelängt, also ausgefahren bzw. gedehnt, und/oder vollständig eingefahren, also komprimiert bzw. zusammengeschoben, ist

Es kann auch vorgesehen sein, dass die Soll-Steuerungsdaten SSD in der Prozesseinheit 11.1 derart voreingestellt sind, dass eine Längung und/oder Komprimierung eines Transportstreckenabschnittes TSA erst dann erfolgt, wenn die Dehnung und/oder Komprimierung des wenigstens einen weiteren Transportstreckenabschnittes TSA vollständig erfolgt, d.h. abgeschlossen durchgeführt, ist.

In einer weiteren Ausführungsvariante kann die Transportvorrichtung 1' einen Kettenpuffer bzw. Kettenspeicher 55 aufweisen, welcher je nach Betriebszustand der Transportvorrichtung 1' überflüssige Längen des Transportelementes 3', 3", insbesondere aktuell nicht notwendige Transportelementabschnitte, aufnimmt und/oder benötige Längen des Transportelementes 3', 3" zusätzlich bereitstellt. Dem Kettenspeicher 55 können hierfür weitere Umlenkrichtungen 56 und/oder separate Antriebseinrichtungen 57 zugeordnet sein.

### Bezugszeichenliste

- 1, 1': Transportvorrichtung
- 1.1: vorderes Ende
- 1.2: rückwärtiges
- 1.10: Maschinenrahmen
- 2: Transportgut
- 2.1: Bodenfläche
- 3, 3', 3": Transportelement
- 3.1: erste Transportelement
- 3.2: zweite Transportelement
- 4.1: vordere Umlenkreinrichtung
- 4.2: rückwärtige Umlenkeinrichtung
- 5: Antriebseinrichtung
- 5.1: erste Antriebseinrichtung
- 5.2: zweite Antriebseinrichtung
- 5.3: dritte Antriebseinrichtung
- 5.4: vierte Antriebseinrichtung
- 6: Stator
- 7: Rotor
- 8: Kettenverzahnung
- 9: Tragachse
- 10: Durchbrechung
- 11: Steuereinheit
- 11.1: Prozesseinheit
- 11.2: Speichereinheit
- 11.3: Schnittstelle
- 12: Steuerleitung

- 40, 40': Transportkette
- 41, 41': Kettenglied
- 42: Trägerabschnitt
- 43: erster Kettengliedabschnitt
- 44: zweiter Kettengliedabschnitt
- 45: Kettengliederelement
- 46: Kettengliederelement
- 47: Schlitz
- 48: Bolzen
- 49: erstes Kettengliedsegment
- 50: zweites Kettengliedsegment
- 51: Kettengliedelement
- 52: Kettengliedelement
- 53: Schlitz
- 54: Bolzen
- 55: Kettenpuffer
- 56: Umlenkeinrichtung
- 57: Antriebseinrichtung

- A: Transportrichtung
- TS: Transportstrecke
- TE: Transportebene
- TSA: Transportstreckenabschnitt
- TSA1: erster Transportstreckenabschnitt
- TSA2: zweiter Transportstreckenabschnitt
- TSA3: dritter Transportstreckenabschnitt
- MA: Motorachse
- KE: Kettengliederebene

- STR: Steuerroutine
- SD: Steuerungsdaten
- ISD1; ISD2: Ist-Steuerdaten
- IDZ1, IDZ2: Ist-Drehzahl
- IDR1, IDR2: Ist-Drehrichtung
- IDW1, IDW2: Ist-Drehwinkel
- IDM1, IDM2: Ist-Drehmoment
- SSD1, SSD2: Soll-Steuerungsdaten
- SDZ1, SDZ2: Soll-Drehzahl

- SDR1, SDR2: Soll-Drehrichtung
- SDW1, IDW2: Soll-Drehwinkel
- SDM1, SDM2: Soll-Drehmoment

## Patentansprüche

1. Transportvorrichtung zum Transportieren von Transportgut (2) in einer Transportrichtung (A) mit wenigstens einem, eine geschlossene Schlaufe bildenden und umlaufend angetriebenen Transportelement (3, 3', 3",40, 40'), das zur Ausbildung jeweils einer geschlossenen Schlaufe an einem vorderen Ende (1.1) über eine bezogen auf die Transportrichtung (A) vordere, sowie drehbar an einem Maschinenrahmen (1.10) der Transportvorrichtung (1) gelagert angeordnete, und als Umlenkrolle ausgebildete Umlenkeinrichtung (4.1) geführt ist und an einem rückwärtigen Ende (1.2) über eine bezogen auf die Transportrichtung (A) rückwärtige, sowie drehbar an dem Maschinenrahmen (1.10) der Transportvorrichtung (1) angeordnete, und als Umlenkrolle ausgebildete Umlenkeinrichtung (4.2) geführt ist, und die zwischen der vorderen und der rückwärtigen Umlenkeinrichtung (4.1, 4.2) mittels des wenigstens einen Transportelementes (3, 3', 3", 40, 40') eine Transportstrecke (TS) für das Transportgut (2) ausbildet, wobei zum Antreiben des wenigstens einen Transportelementes (3, 3', 3", 40, 40') mindestens zwei Antriebseinrichtungen (5, 5.1, 5.2) vorgesehen sind, die beabstandet zueinander an unterschiedlichen Stellen entlang der Transportstrecke (TS) mit dem wenigstens einen Transportelement (3, 3', 3", 40, 40') in Wirkverbindung stehen, wobei das wenigstens eine Transportelement (3', 3", 40, 40') mehrere drehbeweglich und relativ zueinander verschiebbar angeordnete Transportelementabschnitte (41, 41') aufweist, derart, dass durch eine relative Verschiebung der einzelnen Transportelementabschnitte (41, 41') zueinander die Gesamtlänge des jeweiligen Transportelementes (3', 3", 40, 40') veränderbar ist und wobei die Transportstrecke (TS) wenigstens zwei Transportstreckenabschnitte (TSA, TSA1, TSA2) aufweist, die sich jeweils zwischen zwei in Transportrichtung (A) aufeinander folgenden Antriebseinrichtungen (5) erstrecken, so dass durch eine gezielte Ansteuerung benachbarter Transportstreckenabschnitte (TSA) mit einer Differenzgeschwindigkeit mittels der jeweiligen Antriebseinrichtungen (5) eine Akkumulation und/oder Lückenbildung der jeweils auf diesem Transportstreckenabschnitt (TSA) befindlichen Transportgüter (2) einstellbar ist, und wobei zur abgestimmten Ansteuerung der einzelnen Transportstreckenabschnitte (TSA, TSA1, TSA2) untereinander die jeweils den Transportstreckenabschnitten (TSA, TSA1, TSA2) zugeordneten Antriebseinrichtungen (5) mit einer Steuereinheit (11) verbunden sind, und wobei sich ein erster Transportstreckenabschnitt (TSA1) von einer ersten Antriebseinrichtung (5.1) in Transportrichtung (A) bis zu einer zweiten Antriebseinrichtung (5.2) erstreckt, **dadurch gekennzeichnet, dass** sich ein zweiter Transportstreckenabschnitt (TSA2) von der zweiten Antriebseinrichtung (5.2) bis zum in Transportrichtung (A) gesehen rückwärtigen Ende (1.2) der Transportstrecke (TS) erstreckt.

2. Transportvorrichtung nach Anspruch 1, **dadurch gekennzeichnet, dass** die Steuereinheit (11) wenigstens eine Prozesseinheit (11.1), eine mit der Prozesseinheit (11.1) zusammenwirkende Speichereinheit (11.2) sowie eine Schnittstelle (11.3) aufweist.

3. Transportvorrichtung nach Anspruch 2, **dadurch gekennzeichnet, dass** die Ansteuerung der jeweiligen Antriebseinrichtungen (5, 5.1, 5.2) über eine in der Prozesseinheit (11.1) ausgeführte Steuerroutine (STR) erfolgt.

4. Transportvorrichtung nach Anspruch 2 oder 3, **dadurch gekennzeichnet, dass** die Speichereinheit (11.2) zum zumindest zeitweisen Speichern von Ist-Steuerdaten (ISD) und/oder Soll-Steuerdaten (SSD) ausgebildet ist, wobei zumindest eine erfasste Ist-Drehzahl (IDZ), Ist-Drehrichtung (IDR), Ist-Drehwinkel (IDW) und zumindest ein Ist-Drehmoment (IDM) die Soll-Steuerdaten (SSD) bilden.

5. Transportvorrichtung nach einem der Ansprüche 2 bis 4, **dadurch gekennzeichnet, dass** die Prozesseinheit (11.1) dazu eingerichtet ist, über die Schnittstelle (11.3) empfangene Ist-Steuerdaten (ISD) mit Soll-Steuerdaten (SSD) zu vergleichen und abhängig davon in Steuerdaten (SD) für die Steuerroutine (STR) umzuwandeln, bzw. Steuerbefehle zu definieren, die an die entsprechende Antriebseinrichtung (5) des entsprechenden Transportstreckenabschnittes (TSA) übertragen werden, um den jeweiligen Transportportstreckenabschnitt (TSA) abhängig von den mittels der Steuerroutine (STR) erzeugten Steuerdaten (SD) gesteuert anzutreiben.

6. Transportvorrichtung nach einem der Ansprüche 2 bis 5, **dadurch gekennzeichnet, dass** die Prozesseinheit (11.1) dazu eingerichtet ist, die Ist-Steuerdaten (ISD) aus dem Nennstrom zu ermitteln, der zum Betreiben der jeweiligen Antriebseinrichtung (5, 5.1, 5.2) notwendig ist.

7. Transportvorrichtung nach einem der Ansprüche 2 bis 6, **dadurch gekennzeichnet, dass** die Prozesseinrichtung (11.1) dazu eingerichtet ist, die jeweiligen Antriebseinrichtungen (5, 5.1, 5.2) in einer Master-Slave-Kopplung zu betreiben.

8. Transportvorrichtung nach einem der Ansprüche 1 bis 7, **dadurch gekennzeichnet, dass** die wenigstens zwei Antriebseinrichtungen (5, 5.1, 5.2) jeweils als direkt antreibbare Elektromotoren ausgebildet sind.

9. Transportvorrichtung nach einem der Ansprüche 1 bis 8, **dadurch gekennzeichnet, dass** die Transportstrecke (TS) einen geraden und/oder kurvengängigen Verlauf aufweist.

10. Transportvorrichtung nach Anspruch 9, **dadurch gekennzeichnet, dass** bei einem kurvengängigen Verlauf der Transportstrecke (TS) wenigstens eine Antriebseinrichtung (5, 5.1, 5.2) vor einer jeweiligen Kurve angeordnet ist.

11. Transportvorrichtung nach Anspruch 10, **dadurch gekennzeichnet, dass** sowohl vor als auch nach der jeweiligen Kurve eine Antriebseinrichtung (5, 5.1, 5.2) vorgesehen ist.

12. Transportvorrichtung nach einem der Ansprüche 1 bis 11, **dadurch gekennzeichnet, dass** wenigstens zwei Transportelemente (3, 3', 3") vorgesehen sind, die mehrzügig zur Transportrichtung (A) und einander benachbart vorgesehen sind.

13. Transportvorrichtung nach Anspruch 12, **dadurch gekennzeichnet, dass** für jedes einzelne der mehreren Transportelementen (3, 3', 3") jeweils mindestens zwei Antriebseinrichtungen (5) vorgesehen sind.

14. Transportelement nach Anspruch 12, **dadurch gekennzeichnet, dass** den mehreren Transportelementen (3, 3', 3") die mindestens zwei Antriebseinrichtungen (5, 5.1, 5.2) gemeinsam zugeordnet sind, derart, dass jedes einzelne der mehreren Transportelemente (3, 3', 3") jeweils von wenigstens zwei Antriebseinrichtungen (5) angetrieben wird.

15. Transportvorrichtung nach Anspruch 14, **dadurch gekennzeichnet, dass** die mehreren Transportelementabschnitte (41') drehbeweglich und relativ zueinander verschiebbar ausgebildet sind.

16. Transportvorrichtung nach einem der Ansprüche 1 bis 15, **dadurch gekennzeichnet, dass** das wenigstens eine Transportelement (3', 3") als Transportkette (40, 40') ausgebildet ist, die mehrere Kettenglieder (41, 41') aufweist.

17. Transportvorrichtung nach einem der Ansprüche 1 bis 16, **dadurch gekennzeichnet, dass** die Prozesseinheit (11.1) dazu eingerichtet ist, die den wenigstens zwei Transportstreckenabschnitten (TSA) jeweils zugeordneten Antriebseinrichtungen (5) mit unterschiedlichen Soll-Steuerungsdaten (SSD1, SSD2) anzusteuern.

18. Transportvorrichtung nach Anspruch 17, **dadurch gekennzeichnet, dass** die Prozesseinheit (11.1) dazu eingerichtet ist, in Transportrichtung (A) gesehen aufeinander folgende Transportstreckenabschnitte (TSA) derart anzusteuern, dass ein in Transportrichtung (A) gesehen vorderer Transportstreckenabschnitt (TSA) mit einer im Vergleich zu einem in Transportrichtung (A) gesehen rückwärtigen Transportstreckenabschnitt (TSA) mit einer höheren Soll-Drehzahl (SDZ) betrieben wird.

19. Transportvorrichtung nach einem der Ansprüche 17 oder 18, **dadurch gekennzeichnet, dass** die Prozesseinheit (11.1) dazu eingerichtet ist, in Transportrichtung (A) gesehen aufeinander folgende Transportstreckenabschnitte (TSA, TSA1, TSA2) derart anzusteuern, dass ein in Transportrichtung (A) gesehen vorderer Transportstreckenabschnitt (TSA, TSA1, TSA2) mit einer im Vergleich zu einem in Transportrichtung (A) gesehen rückwärtigen Transportstreckenabschnitt (TSA, TSA1, TSA2) mit einer geringeren Soll-Drehzahl (SDZ) betrieben.

20. Transportvorrichtung nach einem der Ansprüche 1 bis 19, **dadurch gekennzeichnet, dass** die Soll-Steuerungsdaten (SSD) in der Prozesseinheit (11.1) derart voreingestellt sind, dass der jeweilige Transportstreckenabschnitt (TSA, TSA1, TSA2) vollständig gelängt und/oder vollständig eingefahren ist.

21. Transportvorrichtung nach einem der Ansprüche 1 bis 20, **dadurch gekennzeichnet, dass** die Soll-Steuerungsdaten (SSD) in der Prozesseinheit (11.1) derart voreingestellt sind, dass eine Längung und/oder Komprimierung eines Transportstreckenabschnittes (TSA, TSA1, TSA2) erst dann erfolgt, wenn die Längung und/oder Komprimierung des wenigstens einen weiteren Transportstreckenabschnittes (TSA, TSA1, TSA2) vollständig erfolgt ist.

22. Transportverfahren zum Transportieren von Transportgut (2) in einer Transportrichtung (A)**,** wobei eine Transportvorrichtung (1, 1') nach einem der vorhergehenden Ansprüche verwendet wird.

23. Verwendung einer Transportvorrichtung (1, 1') gemäß einem der Ansprüche 1 bis 21 zum Transportieren von Transportgut (2) in wenigstens einer Transportrichtung (A) zwischen Behälterbehandlungsmaschinen und/oder Überschubstationen und/oder Transferstationen und/oder Überleitstationen für die Verpackungs- und Getränkeindustrie.

## Claims

1. Transport device for transporting transport materials (2) in a transport direction (A), with at least one transport element (3, 3', 3", 40, 40') which is driven in a circulating manner and forms a closed loop, which, for the formation in each case of a closed loop, is guided at a front end (1.1) over a deflection device (4.1), configured as a deflection roller and arranged as rotatable on a machine frame (1.10) of the transport device (1), upstream in relation to the transport direction (A), and a deflection device (4.2), arranged at a rear end (1.2) in relation to the transport direction (A) and configured as a deflection roller at the rear and rotatable on the machine frame (1.10) of the transport device (1), and forms a transport section (TS) for the transport material (2) between the front and rear deflection device (4.1, 4.2) by means of the at least one transport element (3, 3', 3", 40, 40'), wherein, for driving the at least one transport element (3, 3', 3", 40, 40'), at least two drive devices (5, 5.1, 5.2) are provided, which are in operational connection with the at least one transport element (3, 3', 3", 40, 40') at a distance from one another at different locations along the transport section (TS), wherein the at least one transport element (3', 3", 40, 40') comprises several rotationally movable transport element sections (41, 41') arranged such as to be movable in relation to one another, in such a way that, by means of a relative displacement movement of the individual transport element sections (41, 41') in relation to one another, the total length of the respective transport element (3', 3", 40, 40') can be changed, and wherein the transport section (TS) comprises at least two transport section parts (TSA, TSA1, TSA2), which in each case extend between two drive devices (5) following one another in the transport direction (A), such that, by means of a specific controlled actuation of adjacent transport section parts (TSA) with a differential speed, by means of the respective drive devices (5), an accumulation and/or gap formation of the respective transport materials (2) located on this transport section part (TSA) can be adjusted, and wherein, for the specific controlled actuation of the individual transport section parts (TSA, TSA1, TSA2) in relation to one another, the drive devices (5) assigned in each case to the transport section parts (TSA, TSA1, TSA2) are connected to a control unit (11), and wherein a first two transport section parts (TSA1) extends from a first drive device (5.1) in the transport direction (A) as far as a second drive device (5.2), **characterised in that** a second transport section parts (TSA2) extends from the second drive device (5.2) as far as the rear end (1.2) of the transport section (TS), seen in the transport direction (A).

2. Transport device according to claim 1, **characterised in that** the control unit (11) comprises at least one processing unit (11.1), a storage unit (11.2) interacting with the processing unit (11.1), and an interface (11.3).

3. Transport device according to claim 2, **characterised in that** the controlled actuation of the respective drive devices (5, 5.1, 5.2) takes place by means of a control routine (STR) carried out in the processing unit (11.1).

4. Transport device according to claim 2 or 3, **characterised in that** the storage unit (11.2) is configured for the at least temporary storage of actual control data (ISD) and/or reference control data (SSD), wherein at least one detected actual rotation reference value (IDZ), one actual direction of rotation (IDR), actual rotation angle (IDW), and at least one actual torque value (IDM) form the reference control data (SSD).

5. Transport device according to any one of claims 2 to 4, **characterised in that** the processing unit (11.1) is configured such as to compare the actual control data (ISD) received via the interface (11.3) with reference control data (SSD), and, depending on this, to convert it into control data (SD) for the control routine (STR), or to define control commands which are transferred to the corresponding drive device (5) of the corresponding transport section part (TSA), in order for the respective transport section part (TSA) to be driven in a controlled manner as a dependency of the control data (SD) produced by means of the control routine (STR).

6. Transport device according to any one of claims 2 to 5, **characterised in that** the processing unit (11.1) is configured such as to determine the actual control data (ISD) from the rated current which is required in order to drive the respective drive device (5, 5.1, 5.2).

7. Transport device according to any one of claims 2 to 6, **characterised in that** the processing device (11.1) is configured such as to operate the respective drive devices (5, 5.1, 5.2) in a master-slave coupled connection.

8. Transport device according to any one of claims 1 to 7, **characterised in that** the at least two drive devices (5, 5.1, 5.2) are configured in each case as directly drivable electric motors.

9. Transport device according to any one of claims 1 to 8, **characterised in that** the transport section (TS) exhibits a straight and/or curved course.

10. Transport device according to claim 9, **characterised in that**, with a curved course of the transport section (TS), at least one drive device (5, 5.1, 5.2) is arranged before a respective curve.

11. Transport device according to claim 10, **characterised in that** a drive device (5, 5.1, 5.2) is provided both before as well as after the respective curve.

12. Transport device according to any one of claims 1 to 11, **characterised in that** at least two transport elements (3, 3', 3") are provided, which are provided as several in the transport direction (A) and adjacent to one another.

13. Transport device according to claim 12, **characterised in that**, in each case, at least two drive devices (5) are provided for each individual one of the plurality of transport elements (3, 3', 3").

14. Transport device according to claim 12, **characterised in that** the at least two drive devices (5, 5.1, 5.2) are assigned in common to the several transport elements (3, 3', 3"), in such a way that each individual of the several transport elements (3, 3', 3") are driven in each case by at least two drive devices (5).

15. Transport device according to claim 14, **characterised in that** the several transport element sections (41') are configured as rotationally movable and displaceable relative to one another.

16. Transport device according to any one of claims 1 to 15, **characterised in that** the at least one transport element (3', 3") is configured as a transport chain (40, 40'), which comprises several chain elements (41, 41').

17. Transport device according to any one of claims 1 to 16, **characterised in that** the processing unit (11.1) is configured such as to actuate in a controlled manner the drive devices (5), assigned to the at least two transport section parts (TSA) with different reference control data (SSD1, SSD2).

18. Transport device according to claim 17, **characterised in that** the processing unit (11.1) is configured such as to actuate in a controlled manner the transport section parts (TSA), following one another seen in the transport direction (A), in such a way that a transport section part (TSA), in the front seen in the transport direction (A), is operated at a higher reference speed of rotation (SDZ) in comparison with a transport section part (TSA) at the rear seen in the transport direction (A).

19. Transport device according to any one of claims 17 or 18, **characterised in that** the processing unit (11.1) is configured such as to actuate in a controlled manner the transport section parts (TSA, TSA1, TSA2), following one another seen in the transport direction (A), in such a way that a transport section part (TSA, TSA1, TSA2), seen as in front in the transport direction (A), is driven at a lower reference speed of rotation (SDZ) in comparison with a rear transport section part (TSA, TSA1, TSA2) seen in the transport direction (A).

20. Transport device according to any one of claims 1 to 19, **characterised in that** the reference control data (SSD) is prearranged in the processor unit (11.1) in such a way that the respective transport section part (TSA, TSA1, TSA2) is extended to its complete length and/or is retracted in its entirety.

21. Transport device according to any one of claims 1 to 20, **characterised in that** the reference control data (SSD) is prearranged in the processor unit (11.1) in such a way that a lengthening and/or compression of a transport section part (TSA, TSA1, TSA2) only takes place when the lengthening and/or compression of the at least one further transport section part (TSA, TSA1, TSA2) has been completely carried out.

22. Transport method for transporting transport materials (2) in a transport direction (A), wherein a transport device (1, 1") according to any one of the preceding claims is used.

23. Use of a transport device (1, 1') according to any one of the preceding claims 1 to 21 for the transporting of transport materials (2) in at least one transport direction (A) between container handling machines and/or conveying stations and/or transfer stations and/or overhead conveying stations for the packaging and beverage industries.

## Revendications

1. Dispositif de transport pour le transport d'une marchandise à transporter (2) dans une direction de transport (A) avec au moins un élément de transport (3, 3', 3", 40, 40') formant une boucle fermée et entraînée en rotation, qui pour la réalisation de respectivement une boucle fermée est guidée sur une extrémité avant (1.1) par l'intermédiaire d'un système de renvoi (4.1) avant par rapport à la direction de transport (A), ainsi que disposé de manière montée en rotation sur un bâti de machine (1.10) du dispositif de transport (1), et réalisé en tant que poulie de renvoi et est guidée sur une extrémité arrière (1.2) par l'intermédiaire d'un système de renvoi (4.2) arrière par rapport à la direction de transport (A), ainsi que disposé en rotation sur le bâti de machine (1.10) du dispositif de transport (1), et réalisé en tant que poulie de renvoi, et qui réalise entre le système de renvoi avant et le système de renvoi arrière (4.1, 4.2) au moyen de l'au moins un élément de transport (3, 3', 3", 40, 40') un trajet de transport (TS) pour la marchandise à transporter (2), dans lequel pour entraîner l'au moins un élément de transport (3, 3', 3", 40, 40') au moins deux systèmes d'entraînement (5, 5.1, 5.2) sont prévus, qui de manière espacée l'un de l'autre à des endroits différents le long du trajet de transport (TS) sont en liaison fonctionnelle avec l'au moins un élément de transport (3, 3', 3", 40, 40'), dans lequel l'au moins un élément de transport (3, 3', 3", 40, 40') présente plusieurs sections d'élément de transport (41, 41') disposées de manière mobile en rotation et déplaçables les unes par rapport aux autres, de telle sorte que la longueur totale de l'élément de transport (3, 3', 3", 40, 40') respectif peut être modifiée par un déplacement relatif des sections d'élément de transport (41, 41') individuelles les unes par rapport aux autres et dans lequel le trajet de transport (TS) présente au moins deux sections de trajet de transport (TSA, TSA1, TSA2), qui s'étendent respectivement entre deux systèmes d'entraînement (5) se succédant dans la direction de transport (A), de sorte qu'une accumulation et/ou formation d'intervalle des marchandises à transporter (2) se trouvant respectivement sur cette section de trajet de transport (TSA) peut être réglée par une commande ciblée de sections de trajet de transport (TSA) voisines avec une vitesse différentielle au moyen des systèmes d'entraînement (5) respectifs, et dans lequel pour la commande coordonnée des sections de trajet de transport (TSA, TSA1, TSA2) individuelles entre elles les systèmes d'entraînement (5) affectés respectivement aux sections de trajet de transport (TSA, TSA1, TSA2) sont reliés à une unité de commande (11), et dans lequel une première section de trajet de transport (TSA1) s'étend d'un premier système d'entraînement (5.1) dans la direction de transport (A) à un deuxième système d'entraînement (5.2), **caractérisé en ce qu'**une deuxième section de trajet de transport (TSA2) s'étend du deuxième système d'entraînement (5.2) à l'extrémité arrière (1.2) du trajet de transport (TS) vue dans la direction de transport (A).

2. Dispositif de transport selon la revendication 1, **caractérisé en ce que** l'unité de commande (11) présente au moins une unité de traitement (11.1), une unité de stockage (11.2) interagissant avec l'unité de traitement (11.1) ainsi qu'une interface (11.3).

3. Dispositif de transport selon la revendication 2, **caractérisé en ce que** la commande des systèmes d'entraînement (5, 5.1, 5.2) respectifs s'effectue par l'intermédiaire d'une routine de commande (STR) exécutée dans l'unité de traitement (11.1).

4. Dispositif de transport selon la revendication 2 ou 3, **caractérisé en ce que** l'unité de stockage (11.2) est réalisée pour le stockage au moins temporaire de données de commande réelles (ISD) et/ou de données de commande théoriques (SSD), dans lequel au moins une vitesse de rotation réelle (IDZ), un sens de rotation réel (IDR), un angle de rotation réel (IDW) et au moins un couple réel (IDM) acquis forment les données de commande théoriques (SSD).

5. Dispositif de transport selon l'une quelconque des revendications 2 à 4, **caractérisé en ce que** l'unité de traitement (11.1) est configurée pour comparer les données de commande réelles (ISD) reçues par l'intermédiaire de l'interface (11.3) avec les données de commande théoriques (SSD) et pour les convertir en fonction de celles-ci en données de commande (SD) pour la routine de commande (STR), ou pour définir des instructions de commande qui sont transmises au système d'entraînement (5) correspondant de la section de trajet de transport (TSA) correspondante afin d'entraîner de manière commandée la section de trajet de port de transport (TSA) respective en fonction des données de commande (SD) générées au moyen de la routine de commande (STR).

6. Dispositif de transport selon l'une quelconque des revendications 2 à 5, **caractérisé en ce que** l'unité de traitement (11.1) est configurée pour déterminer les données de commande réelles (ISD) à partir du courant nominal qui est nécessaire au fonctionnement du système d'entraînement (5, 5.1, 5.2) respectif.

7. Dispositif de transport selon l'une quelconque des revendications 2 à 6, **caractérisé en ce que** le système de traitement (11.1) est configuré pour faire fonctionner les systèmes d'entraînement (5, 5.1, 5.2) respectifs dans un couplage maître-esclave.

8. Dispositif de transport selon l'une quelconque des revendications 1 à 7, **caractérisé en ce que** les au moins deux systèmes d'entraînement (5, 5.1, 5.2) sont respectivement réalisés en tant que moteurs électriques à entraînement direct.

9. Dispositif de transport selon l'une quelconque des revendications 1 à 8, **caractérisé en ce que** le trajet de transport (TS) présente un tracé droit et/ou courbe.

10. Dispositif de transport selon la revendication 9, **caractérisé en ce qu'**au moins un système d'entraînement (5, 5.1, 5.2) est disposé en amont d'une courbe respective dans le cas d'un tracé courbé du trajet de transport (TS).

11. Dispositif de transport selon la revendication 10, **caractérisé en ce qu'**un système d'entraînement (5, 5.1, 5.2) est prévu tant avant qu'après la courbe respective.

12. Dispositif de transport selon l'une quelconque des revendications 1 à 11, **caractérisé en ce qu'**au moins deux éléments de transport (3, 3', 3") sont prévus, qui sont prévus avec des passages multiples par rapport à la direction de transport (A) et de manière voisine l'un de l'autre.

13. Dispositif de transport selon la revendication 12, **caractérisé en ce que** respectivement au moins deux systèmes d'entraînement (5) sont prévus pour chacun des plusieurs éléments de transport (3, 3', 3").

14. Élément de transport selon la revendication 12, **caractérisé en ce que** les au moins deux systèmes d'entraînement (5, 5.1, 5.2) sont affectés ensemble aux plusieurs éléments de transport (3, 3', 3"), de sorte que chacun des plusieurs éléments de transport (3, 3', 3") est entraîné respectivement par au moins deux systèmes d'entraînement (5).

15. Dispositif de transport selon la revendication 14, **caractérisé en ce que** les plusieurs sections d'élément de transport (41') sont réalisées de manière mobile en rotation et déplaçable les unes par rapport aux autres.

16. Dispositif de transport selon l'une quelconque des revendications 1 à 15, **caractérisé en ce que** l'au moins un élément de transport (3', 3") est réalisé en tant que chaîne de transport (40, 40') qui présente plusieurs maillons de chaîne (41, 41').

17. Dispositif de transport selon l'une quelconque des revendications 1 à 16, **caractérisé en ce que** l'unité de traitement (11.1) est configurée pour commander les systèmes d'entraînement (5) respectivement affectés aux au moins deux sections de trajet de transport (TSA) avec des données de commande théoriques (SSD1, SSD2) différentes.

18. Dispositif de transport selon la revendication 17, **caractérisé en ce que** l'unité de traitement (11.1) est configurée pour commander des sections de trajet de transport (TSA) successives vues dans la direction de transport (A), de sorte qu'une section de trajet de transport (TSA) avant vue dans la direction de transport (A) est exploitée avec une section de trajet de transport (TSA) arrière avec une à une vitesse de rotation théorique (SDZ) plus élevée par rapport à une section de trajet de transport (TSA) arrière vue dans la direction de transport (A).

19. Dispositif de transport selon l'une quelconque des revendications 17 ou 18, **caractérisé en ce que** l'unité de traitement (11.1) est configurée pour commander des sections de trajet de transport (TSA, TSA1, TSA2) successives vues dans la direction de transport (A), de sorte qu'une section de trajet de transport (TSA, TSA1, TSA2) avant vue dans la direction de transport (A) est exploitée avec une à une vitesse de rotation théorique (SDZ) plus faible par rapport à une section de trajet transport (TSA, TSA1, TSA2) arrière vue dans la direction de transport (A) .

20. Dispositif de transport selon l'une quelconque des revendications 1 à 19, **caractérisé en ce que** les données de commande théoriques (SSD) sont préréglées dans l'unité de traitement (11.1) de sorte que la section de trajet de transport (TSA, TSA1, TSA2) respective soit complètement allongée et/ou complètement rétractée.

21. Dispositif de transport selon l'une quelconque des revendications 1 à 20, **caractérisé en ce que** les données de commande théoriques (SSD) sont préréglées dans l'unité de traitement (11.1) de sorte qu'un allongement et/ou une compression d'une section de trajet de transport (TSA, TSA1, TSA2) n'a lieu que lorsque l'allongement et/ou la compression de l'au moins une autre section de trajet de transport (TSA, TSA1, TSA2) est terminée.

22. Procédé de transport pour transporter une marchandise à transporter (2) dans une direction de transport (A), dans lequel un dispositif de transport (1, 1') selon l'une quelconque des revendications précédentes est utilisé.

23. Utilisation d'un dispositif de transport (1, 1') selon l'une quelconque des revendications 1 à 21 pour transporter une marchandise à transporter (2) dans au moins une direction de transport (A) entre des machines de traitement de récipients et/ou des stations de transition et/ou des stations de transfert et/ou des stations de passage pour l'industrie de l'emballage et des boissons.
